# FASCICULE DE BREVET EUROPEEN

(11) **EP 1 184 298 B1**
(45) Date de publication et mention de la délivrance du brevet: **07.07.2004**
(21) Numéro de dépôt: 01402241.2
(22) Date de dépôt: 28.08.2001
(51) Int. Cl.: B65D 81/20, B65D 85/76, A23C 19/068

(54) **Procédé et système de conditionnement de fromages à croûte fleurie**
Verfahren und System zur Verpackung von Weichkäsen mit Oberflächenschimmel
Method and system for packaging moulded rind cheese

(30) Priorité: 28.08.2000 FR 0010997
(43) Date de publication de la demande: 06.03.2002
(73) Titulaire: BSA International, 1000 Bruxelles (BE)
(72) Inventeur: Roger, Bruno, 41100 Vendome (FR)
(74) Mandataire: Dupuis-Latour, Dominique

(56) Documents cités:
- EP-A- 0 351 116
- FR-A- 2 791 651

## Description

L'invention concerne un nouveau procédé et un nouveau système de conditionnement pour fromages ou spécialités fromagères à croûte naturelle fleurie.

Par "fromages à croûte naturelle fleurie", on entend des fromages présentant une croûte blanche ayant l'aspect d'une feutrine formée par le développement d'une flore superficielle caractérisée par la présence unique ou prédominante d'au moins une moisissure, et/ou d'au moins une levure et éventuellement en association avec une souche bactérienne non pigmentante, pendant un temps nécessaire au développement des caractéristiques organoleptiques et de texture désirées. La flore superficielle des fromages à croûte fleurie diffère donc par sa composition de la flore superficielle des fromages à croûte mixte.

Dans les "fromages à croûte mixte", la flore superficielle est composée de l'association d'au moins deux types différents de microorganismes, dont au moins une souche bactérienne pigmentante, en association avec des levures et/ou moisissures. Le développement de cette flore aboutit à la formation d'une croûte de couleur orangée. Les bactéries pigmentantes utilisées en fromagerie appartiennent au type *micrococcus* ou corynéforme, à l'exclusion pour ce dernier groupe de *Brevibacterium* ammoniagenes, *Corynebacterium variabilis* et *Microbacter lacticum.*

Les fromages à croûte fleurie peuvent être obtenus à partir de fait pasteurisé. Le traitement thermique éliminant les germes pathogènes présents dans le lait contribue à la sécurité alimentaire mais entraîne également la destruction de la flore utile. Dans ce cas, le fromager doit réensemencer son lait en germes utiles d'aromatisation. A cet effet, il sélectionne la flore utile en fonction des caractères organoleptiques qu'il souhaite conférer au produit final.

Pour les fromages à croûte fleurie, la flore est essentiellement constituée de moissisures du genre *Penicillium* et *Cylindrocarpon,* et de levures du genre *Geotrichum.*

Une souche bactérienne peut être ajoutée à la flore des fromages à croûte fleurie. Dans ce cas, la souche bactérienne sera choisie pour son potentiel aromatique et ne sera pas pigmentante. On exclura ainsi particulièrement les bactéries corynéformes ou microccacae pigmentantes.

Actuellement, les fromages à croûte fleurie sont conditionnés sous différentes présentations (boîtes, emballages complexes mis en oeuvre par pliage, cloche, etc) et différents matériaux : bois, carton, papier paraffiné associé à une pellicule cellulosique, polypropylène, aluminium, etc.....

Ces types de conditionnement permettent une durée de conservation après emballage des produits pendant 30 à 49 jours selon les produits.

Par ailleurs, la conservation des produits alimentaires et plus particulièrement des fromages a fait l'objet de nombreuses études qui ont permis de comprendre certains phénomènes physiques, chimiques et biologiques essentiels.

L'article intitulé "conditionnement des fromages à pâtes molles", publié en juin 1985 par Gerd STEHLE paru dans le N°999 de la revue LA TECHNIQUE LAITIERE est particulièrement instructif. Il en ressort qu'une bonne conservation des fromages implique un choix convenable de la perméabilité de l'emballage au gaz, spécialement à l'oxygène, à la vapeur d'eau, au gaz carbonique et à l'ammoniac.

Cependant, aucun des emballages décrit à ce jour ne permet la conservation des fromages à croûte fleurie composée exclusivement de moisissures et éventuellement de levures dans des conditions optimales.

FR 1 397 270 décrit un emballage pour produits alimentaires, notamment pour fruits et légumes, formé d'un film en matière synthétique permettant d'obtenir à l'intérieur de l'emballage, le rapport entre la pression d'oxygène et la pression de gaz carbonique assurant la bonne conservation des fruits et légumes.

EP 0 153 215 propose d'améliorer la conservation des produits alimentaires en les plaçant dans des emballages imperméables au gaz. Après avoir fait le vide dans l'emballage, on y injecte un mélange gazeux constitué de quantités substantielles d'anhydride carbonique et d'azote. L'anhydride carbonique produit un effet bactériostatique et l'azote un effet antioxydant (substitution à l'oxygène).

FR 2 198 700 enseigne la conservation de produits agricoles (fruits ou légumes) en les plaçant dans des sacs munis de fenêtres à perméabilité sélective, initialement remplis d'un gaz inerte, le tout étant placé dans un caisson contenant une atmosphère modifiée.

FR 2 049 237 décrit une boîte pour le conditionnement de fromages, en matière plastique permettant la circulation de l'air à l'intérieur de la boîte et avec l'extérieur.

FR 2 517 279 décrit une boîte destinée à la conservation de produits sensibles à la déshydratation, tels que les laitues, qui permet de conserver ces produits dans une atmosphère à forte pression partielle de vapeur d'eau sans qu'ils soient en contact avec l'eau liquide.

Enfin, FR 2 617 811 décrit un emballage qui permet la poursuite de l'affinage des fromages à croûte naturelle fleurie dans des conditions améliorées. A cet effet, la boîte permet la circulation de l'air autour du fromage et l'échange de vapeur d'eau avec l'extérieur, la boîte étant fermée par scellage et constituée d'un matériau étanche, muni de fenêtres recouvertes de membranes à perméabilité sélective permettant un apport d'air venant de l'extérieur en quantité contrôlée.

Le réglage des échanges entre le produit et l'extérieur se fait par l'intermédiaire de ces membranes à perméabilité sélective. Toutefois, aucune indication précise n'est donnée ni sur l'environnement gazeux autour du fromage, ni sur la quantification des échanges, ni sur les perméabilités sélectives correspondantes des membranes.

Ainsi, la description ne précise à aucun moment les caractéristiques du matériau utilisé excepté dans l'exemple particulier. Toutefois, dans cet exemple, le type de conditionnement décrit ne permet pas d'assurer une conservation optimale tout au long du cycle de commercialisation. En effet, les valeurs de perméabilité nécessaires au maintien optimal de la flore, compte tenu de la superficie des fenêtres se situent dans des gammes de valeur ne correspondant ni à des valeurs mesurables par les méthodes et appareillage connus de l'homme de métier, ni à aucun matériau connu.

L'objectif de la présente invention est de proposer un système de conditionnement qui permet de maintenir les concentrations gazeuses optimales pour l'évolution de la flore de surface de fromages ou spécialités fromagères à croûte naturelle fleurie obtenue par l'action de moisissures et/ou de levures, en l'absence de bactéries corynéformes et microccacae pigmentantes, et ainsi d'augmenter la fenêtre de commercialisation des produits tout en maintenant leurs qualités organoleptiques et leur présentation à l'optimum.

Dans la présente invention, on entend par "évolution" de la flore, sa stabilisation et sa survie sans altération ni destruction importante des microorganismes la constituant, ce qui signifie le maintien d'un développement minimum de cette flore et exige un environnement gazeux approprié.

Les travaux des inventeurs ayant conduit à la présente invention ont permis de déterminer les conditions gazeuses optimales permettant une évolution optimale d'une flore de fromages ou spécialités fromagères à croûte fleurie, lorsque cette flore est constituée d'au moins une moisissure et/ou d'au moins une levure, éventuellement en association avec une souche bactérienne non pigmentante.

Dans le cadre de la présente invention, la flore des fromages à croûte fleurie considérée sera plus particulièrement constituée par la présence spécifique d'une moisissure du genre *Penicillium*, et plus particulièrement *Penicillium camemberti*, et/ou d'une levure du genre *Geotrichum,* et plus particulièrement *Geotrichum* candidum, associée(s) ou non à une bactérie non pigmentante, choisie exclusivement parmi les souches *Brevibacterium ammoniagenes, Corynebacterium variabilis* et *Microbacter lacticum.*

L'invention a ainsi pour objet un procédé pour conditionner des fromages ou des spécialités fromagères à croûte naturelle fleurie, obtenue par au moins une moisissure et/ou au moins une levure, éventuellement en association avec une souche bactérienne non pigmentante, caractérisé en ce que l'on place le fromage ou la spécialité fromagère dans une enceinte hermétiquement close comprenant sur tout ou partie de sa surface un matériau à perméabilité sélective assurant un flux gazeux avec l'atmosphère extérieure de manière à constituer et maintenir autour du fromage ou de la spécialité fromagère une atmosphère comprenant de 14 à 20 %, de préférence de 15 à 20 %, de préférence encore 17 à 19,5% en volume d'O₂ et de 1 à 6 %, de préférence de 1 à 5%, de préférence encore 1 à 3% en volume de CO₂ pendant toute la durée de conservation du fromage ou de la spécialité fromagère, ledit matériau à perméabilité sélective ayant une perméabilité à l'oxygène et à l'anhydride carbonique inférieure à 2 000 000 cm³/m²/24h/atm et supérieure à 5000 cm²/m²/24h/atm mesurée à 25°C.

Par «enceinte hermétiquement close comprenant sur tout ou partie de sa surface un matériau à perméabilité sélective assurant un flux gazeux avec l'atmosphère extérieure», on entend soit une enceinte constituée en totalité dudit matériau à perméabilité sélective, soit une enceinte partiellement constituée d'un matériau hermétique pratiquement imperméable aux gaz (O₂, CO₂, N₂ et vapeur d'eau) et qui est fermée par ledit matériau à perméabilité sélective au travers duquel se réalisent les échanges gazeux avec l'atmosphère extérieure.

Le groupe des moisissures est avantageusement constitué par les genres *Penicillium* et *Cylindrocarpon,* les espèces préférées étant *Penicillium camemberti* et *Cylindrocarpon heteronema.*

Les levures sont avantageusement choisies parmi les levures du genre *Geotrichum, Saccharomyces, Kluyveromyces, Hansenula, Yarrowia, Candida*, une espèce particulièrement préférée étant *Geotrichum candidum.*

Le procédé de l'invention convient tout particulièrement aux flores constituées par des *Penicillium* et/ou une levure appartenant au genre *Geotrichum,* notamment *Geotrichum candidum.*

Il est connu que les conditions d'environnement donné permettant à la flore superficielle d'affinage de se maintenir sans altération sont liées au type de microorganismes ou d'association de microorganismes constitutifs de cette flore, chaque microorganisme ou chaque association se caractérisant par une intensité respiratoire spécifique dépendant de son stade physiologique et du substrat sur lequel il est implanté.

Cette intensité respiratoire se caractérise par une consommation en O₂ et par une production de CO₂ que les inventeurs ont quantifié dans le but de déterminer les concentrations gazeuses optimales devant régner au sein de l'emballage.

On peut citer à titre d'exemple des intensités respiratoires (IR) d'une flore constituée uniquement de *Penicillium* implantée sur un fromage à pâte molle minéralisée de format coulommiers qui sont les suivantes :
- IR en O₂ : 0,48 (exprimée en cm³/cm² de flore pour 24h);
- IR en CO₂ : 0,46 (exprimée en cm³/cm² de flore pour 24h) ;

La méthode ayant permis le calcul des IR est décrite dans la publication de B.Roger et al. : "Le Lait" (1998, 78, n°2, p.241-250)

Pour assurer la conservation optimale du fromage et notamment augmenter la fenêtre de commercialisation, les microorganismes constitutifs de la flore d'affinage doivent trouver dans leur environnement proche des concentrations optimales en composés gazeux nécessaires à leur métabolisme, notamment en O₂ et CO₂ leur permettant de satisfaire leurs besoins physiologiques et métaboliques.

Les inventeurs ont cherché à maintenir des concentrations gazeuses optimales par régulation du flux d'échanges gazeux entre le produit fromager et son environnement (généralement l'air ambiant) dans lequel il est conservé au travers du matériau étanche utilisé pour l'enceinte de son conditionnement. Ce flux est fonction de la surface active de la flore et de celle de l'emballage ainsi que de l'intensité respiratoire de la flore.

Pour établir au sein de l'enceinte de conditionnement les concentrations en O₂ et CO₂ de l'invention, les inventeurs ont déterminé que ce flux pouvait être établi et maintenu de manière avantageuse par le choix d'une enceinte hermétique, constituée totalement ou en partie par au moins un matériau synthétique approprié ayant des caractéristiques de perméabilité choisies en fonction de la surface active de la flore et de la surface du matériau à perméabilité sélective utilisé.

A l'équilibre, la perméabilité du matériau actif (à perméabilité sélective) est directement proportionnelle à la surface de la flore.

Pour la détermination précise des concentrations gazeuses optimales qui doivent être établies et maintenues dans l'enceinte hermétiquement close de l'invention, en fonction de la flore de type « croûte fleurie » considérée, on procède en deux étapes :

Dans un premier temps, on quantifie les intensités respiratoires en O₂ et CO₂ de la flore selon le protocole décrit par Roger et al, paru dans "Le lait" (1998).

Dans un second temps, on définit expérimentalement les conditions optimales de concentrations gazeuses nécessaires en ces deux composés permettant la stabilisation et la survie de ladite flore pour en déduire les caractéristiques de perméabilité de la surface de matériau actif utilisé pour le système de conditionnement de l'invention qui est dépendant de la nature de la superficie de la flore.

La détermination des concentrations gazeuses optimales à la survie de la flore se réalise comme suit :

Les fromages, au stade présumé de l'emballage sont placés dans des enceintes étanches aux gaz où le niveau des concentrations gazeuses en CO₂ et en O₂ est volontairement maintenu à des niveaux fixes et prédéterminés pendant les sept semaines de conservation au froid par injection régulière d'un mélange gazeux.

Les fromages sont analysés et examinés à différents stades de la conservation par analyse sensorielle, analyse physico-chimique du fromage, analyse microbiologique de la flore de surface et colorimétrie de cette flore. Les conditions gazeuses optimales sont déterminées en identifiant les produits correspondant le plus à l'objectif prédéfini qualificatif (qualité organoleptique, présentation) pendant sept semaines minimum de conservation.

Des matériaux à perméabilité sélective permettant d'assurer et de maintenir autour des fromages une atmosphère telle que définie précédemment sont décrits pour leur application à la conservation de fruits et légumes dans l'art antérieur, notamment EP 0 351 115 et /0 351 116/.

De manière générale, pour établir et maintenir les concentrations spécifiques en O₂ et CO₂ de l'invention au sein de l'enceinte de l'invention, les matériaux ont une perméabilité à l'oxygène et à l'anhydride carbonique inférieure à 2 000 000 cm³/m²/24 heures/atm et supérieure à 5 000 cm³/m²/24 heures/atm mesurées à 25°C.

De manière avantageuse, la perméabilité à l'O₂ et au CO₂ est comprise entre 150 000 et 360 000 cm³/m²/24 heures/atm, mesurée à 25°C.

De manière générale, la perméabilité à la vapeur d'eau de ces matériaux est avantageusement inférieure à 800 g/m²/24 heures/atm et supérieure à 1 g/m²/24 heures/atm mesurée à 25°C.

Conformément à l'enseignement de EP 351 115 et EP 351 116, la perméabilité à l'O₂ et au CO₂ d'un matériau polymère synthétique est réglée pour un matériau donné par des microperforations dont le diamètre varie entre 20 µm, voire moins et 100 µm, et est avantageusement compris entre 40 et 60 µm, et dont la densité varie entre 10 perforations et 1000 perforations par m² de surface de film constituant le matériau à perméabilité sélective.

La perméabilité à la vapeur d'eau est fonction du type de matériau polymère choisi.

Les films sont avantageusement choisis dans des matières synthétiques telles que la cellulose ou cellulose modifiée, les homo et copolymères d'oléfine, le cas échéant avec de l'acétate de vinyle ou de l'acrylate de méthyle, les polyesters, polyamides et polycarbonates.

Les films peuvent être monocouche ou multicouche, souples, rigides et scellables. Leur épaisseur varie généralement entre 5 et 600 µm.

Pour établir et maintenir les concentrations en O₂ et CO₂ définies ci-dessus, l'enceinte hermétiquement close peut en totalité ou en partie seulement comporter un matériau à perméabilité sélective.

Dans le cas où l'enceinte est en partie seulement constituée d'un matériau à perméabilité sélective, les systèmes de conditionnement préférés sont ceux constitués par une partie inférieure notamment un fond en un matériau pratiquement imperméable aux gaz (O₂, CO₂, N₂ et vapeur d'eau) et une partie supérieure, notamment un opercule en un matériau à perméabilité sélective, la perméabilité du matériau étant alors directement liée à la superficie de l'opercule. Une alternative consiste à utiliser une cloche en matière rigide fermée par un opercule en un matériau à perméabilité sélective posée sur un plateau.

Lorsque la surface de matériau à perméabilité sélective est importante, on choisit avantageusement des matériaux dont les caractéristiques de perméabilité se situent dans les limites inférieures de la gamme décrite, donc comportant des perforations de faible diamètre, et avantageusement une densité de perforation faible par unité de surface.

Inversement, lorsque la surface de matériau à perméabilité sélective est peu importante, on choisit avantageusement des matériaux dont les caractéristiques de perméabilité se situent dans les limites supérieures de la gamme décrite, donc comportant des perforations de gros diamètre, et/ou une densité de perforation élevée par unité de surface.

L'invention a également pour objet un système de conditionnement de fromages ou des spécialités fromagères à croûte naturelle fleurie obtenue par le développement d'une flore d'affinage constituée par au moins une moisissure, et/ou au moins une levure éventuellement en association avec une souche bactérienne non pigmentante, caractérisé en ce que le système de conditionnement est constitué par une enceinte hermétiquement close comprenant sur tout ou partie de sa surface un matériau à perméabilité sélective assurant un flux gazeux avec l'atmosphère extérieure de manière à constituer et maintenir autour du fromage ou de la spécialité fromagère une atmosphère comprenant de 14 à 20 %, de préférence 15 à 20 %, de préférence encore 17 à 19,5 % en volume d'O₂ et de 1 à 6 %, de préférence 1 à 5 %, de préférence encore 1 à 3 % en volume de CO₂ pendant toute la durée de conservation du fromage ou de la spécialité fromagère, ledit matériau à perméabilité sélective ayant une perméabilité à l'oxygène et à l'anhydride carbonique inférieure à 2 000 000 cm²/m²/24h/atm et supérieure à 5 000 cm²/m²/24h/atm mesuré à 25°C.

Dans un premier mode de réalisation, le système de conditionnement est constitué en totalité d'un matériau à perméabilité sélective et consiste avantageusement en un sachet scellé par thermoscellage après introduction du fromage.

Dans un second mode de réalisation, le système de conditionnement est constitué en partie seulement d'un matériau à perméabilité sélective, l'autre partie étant constituée par un matériau imperméable aux gaz.

Dans ce dernier cas, une variante particulièrement avantageuse comprend une partie formant fond, notamment une barquette en un matériau thermoplastique imperméable aux gaz et une partie formant couvercle, notamment un opercule en un matériau thermoplastique à perméabilité sélective telle que définie ci-dessus.

L'une des parties formant fond ou couvercle comprend avantageusement un matériau thermoscellable de sorte qu'après introduction du fromage dans la barquette et positionnement du couvercle, les deux parties sont scellées par application d'une température suffisante pour réaliser une fermeture hermétique.

Le système selon l'invention est adapté au conditionnement de fromages à croûte fleurie de formes et dimensions variables. Il convient particulièrement bien aux fromages de poids inférieur à 500 g.

Il convient ainsi aux fromages de type "camembert" ou "coulommiers" de taille standard, c'est-à-dire d'environ 200 à 400 g.

Il convient également aux "mini" formats, dont le poids varie généralement entre 5 g et 50 g.

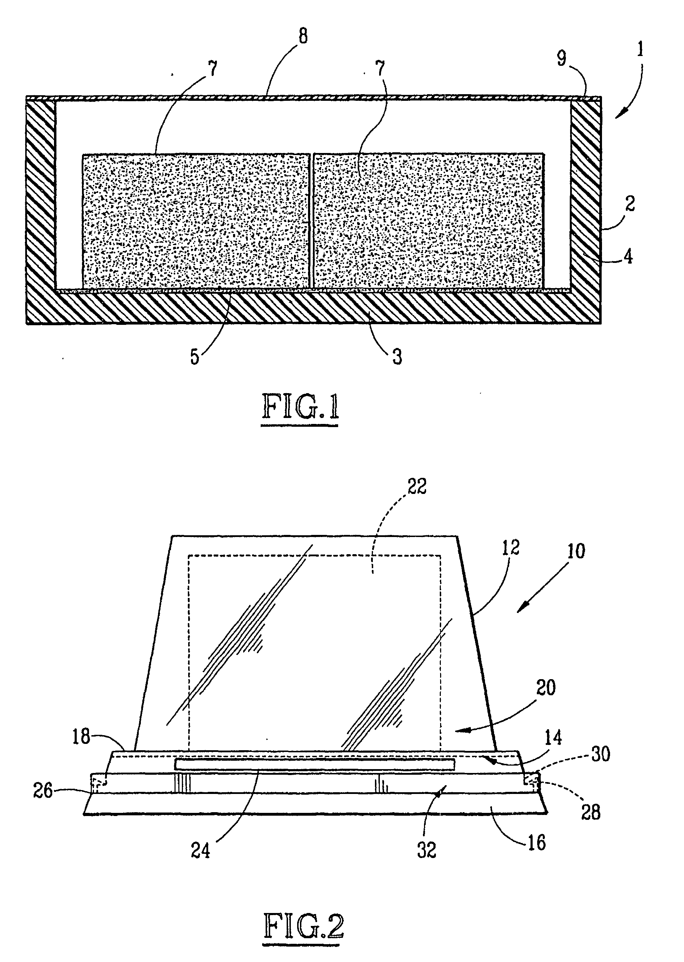

Les figures 1 et 2 annexées sont des vues en coupe transversale de deux modes de réalisation différents d'un moyen de conditionnement d'un fromage selon l'invention.

Le moyen de conditionnement 1 représenté sur la figure 1 comporte une partie inférieure en forme de cylindre, formant une barquette 2. La barquette 2 comprend un fond 3 et des parois latérales 4 en un matériau plastique rigide imperméable au gaz, consistant en un complexe polystyrène/copolymère éthylène et alcool vinylique/polyéthylène. L'épaisseur du fond 3 et des parois latérales 4 est de 600 µm. Sur le fond 3 de la barquette 2, est disposée une feuille 5 en un matériau absorbant l'humidité, par exemple du papier.

Sur la feuille 5, est déposé un fromage entier ou découpé en portions. Dans le mode de réalisation représenté ici, le moyen de conditionnement comprend un fromage à pâte molle et à croûte fleurie de type "camembert", de forme cylindrique découpé en six portions égales 7.

Les dimensions du fromage sont sensiblement inférieures à celles du moyen de conditionnement, afin d'aménager entre le fromage et le moyen de conditionnement un espace suffisant pour garantir une circulation de gaz suffisante du maintien de la flore.

Le moyen de conditionnement comprend également une partie supérieure, formée comme représenté ici d'un opercule 8 en un matériau plastique souple thermoscellable ayant une perméabilité à l'O₂ et au CO₂ comprise entre 150 000 cm³/m²/24 heures/atm et 360 000 cm³/m²/atm, par exemple un complexe polyéthyléne terephtalate/polyéthylène ayant subi un traitement approprié pour lui conférer les perméabilités appropriées au CO₂ et à l'O₂ (microperforations de la taille et densité définies).

L'opercule 8 est fixé par sa périphérie 9 sur le bord supérieur des parois latérales 4 de la barquette 2 par thermoscellage.

Le fromage ainsi conditionné peut être conservé dans des conditions optimales pour l'évolution de sa flore de surface pendant une durée allant jusqu'à 10 semaines, à savoir deux semaines supplémentaires par rapport à la durée de conservation dans un emballage traditionnel.

Le moyen de conditionnement 10 représenté sur la figure 2 comporte essentiellement une cloche hermétiquement close 12 obturée par un opercule 14 formé dans un matériau à perméabilité sélective et un plateau 16 sur lequel est rapportée la cloche 12.

Plus précisément, la cloche 12 est réalisée dans un matériau imperméable aux gaz. Elle présente généralement une forme de pyramide à 4 faces dont le sommet est tronqué. Elle présente intérieurement au voisinage de son extrémité ouverte un épaulement périphérique 18 sur lequel est thermoscellé un bord de l'opercule 14. L'opercule 14 et la cloche 12 définissent un espace 20 hermétiquement clos dans lequel est reçu un fromage à pâte mole et à croûte fleurie 22.

Des lumières de circulation d'air 24 sont ménagées dans les parois latérales de la cloche 12. Ces lumières sont prévues entre l'épaulement périphérique 18 et le bord noté 26 de la cloche délimitant l'ouverture de celle-ci. Ainsi, les lumières 24 débouchent en dehors de l'enceinte 20 dans laquelle est confiné le fromage 22.

Le plateau 16 présente généralement une forme carrée. Sa surface supérieure est plus grande que l'ouverture de la cloche 12. Des moyens d'enclenchement élastiques 28 sont ménagés à la surface supérieure du plateau 16 et sont adaptés pour être reçus dans des empreintes complémentaires 30 définies à la périphérie de la cloche 12.

Pour un tel emballage, on conçoit que l'espace de circulation d'air noté 32, laissé libre entre la surface supérieure du plateau 16 et l'opercule 14, permet un échange de gaz entre le milieu ambiant et l'enceinte 20. En effet, les gaz extraits de l'enceinte 20 au travers de l'opercule 14 peuvent circuler au travers de l'espace 32 avant d'être évacués à travers des lumières 24 vers le milieu ambiant.

Pour consommer le fromage 22, la cloche 12 est dégagée du plateau 16 par rupture des moyens d'enclenchement élastiques 28. L'opercule 14 est ensuite retiré par traction. Le fromage 22 est enfin placé sur la surface supérieure du plateau 16 pour être consommé. Après prélèvement d'une partie du fromage, la cloche 12 peut être remise en place sur le plateau 16 pour protéger le reste du fromage.

Dans ce mode de réalisation, la cloche 12 possède une forme pyramidale. D'autres formes sont envisageables, notamment cylindriques. Dans ce cas, le plateau sur lequel est disposée la cloche aura une forme ronde.

L'exemple suivant est destiné à illustrer l'invention sans la limiter.

### EXEMPLE : Mini-format à croûte fleurie 30 g

Selon un exemple particulier et seulement indicatif de mise en oeuvre de l'invention, le conditionnement est appliqué à un fromage à pâte molle et à croûte fleurie blanche de 30 g environ et de forme cylindrique.

L'extrait sec de ce fromage est, à l'emballage, de 54 %, son pH de 5,1 ; et son taux de matière grasse sur matière sèche de 61 %.

Sa surface recouverte par la flore est de 68 cm². La flore est constituée d'au moins une souche de *Penicillium camemberti* et d'au moins une souche de *Geotrichum candidum.*

L'activité respiratoire de la flore est de :
consommation d'O₂ : 0,3 cm³/m² de flore/24 heures
production de CO₂ : 0,3 cm³/m² de flore/24 heures

Le fromage est emballé, après sept jours d'affinage en hâloir, dans un sachet ("flow-pack") et parfaitement scellé d'une surface de 160 cm². Ce matériau est constitué de polypropylène de 25 µm d'épaisseur. Ce complexe a subi un traitement lui conférant une perméabilité aux gaz adaptée au maintien de l'atmosphère gazeuse dans l'emballage permettant une conservation du produit.

La perméabilité à l'O₂ de cet emballage est de 150 000 cm³/24 heures/m² (mesurée selon les conditions normalisées (23°C, HR=50 %)).

La perméabilité au CO₂ de cet emballage est de 150 000 cm³/24 heures/m² (mesurée selon les conditions normalisées (23°C, HR = 50 %)).

La perméabilité à la vapeur d'eau de cet emballage est de 1 g/m²/24 heures (mesurée selon les conditions normalisées (38°C, delta HR = 90 %).

Après conditionnement, un équilibre gazeux s'établit au sein de l'emballage sous l'action de la respiration de la flore et du transfert à travers le contenant (emballage). Cette concentration en O₂ est comprise entre 17 e 19,5 %, celle en CO₂ entre 1 et 3 %. Ces concentrations sont optimales pour la poursuite de l'affinage du produit dans l'emballage pendant le stockage au froid (4°C).

## Revendications

1. Procédé pour conditionner des fromages ou des spécialités fromagères à croûte naturelle fleurie, **caractérisé en ce que** l'on place le fromage ou la spécialité fromagère dans une enceinte hermétiquement close comprenant sur tout ou partie de sa surface un matériau à perméabilité sélective assurant un flux gazeux avec l'atmosphère extérieure de manière à constituer et maintenir autour du fromage ou de la spécialité fromagère une atmosphère comprenant de 14 à 20 % en volume d'O₂ et de 1 à 6 % en volume de CO₂ pendant toute la durée de conservation du fromage ou de la spécialité fromagère, ledit matériau à perméabilité sélective ayant une perméabilité à l'oxygène et à l'anhydride carbonique inférieure à 2 000 000 cm²/m²/24h/atm et supérieure à 5 000 cm²/m²/24h/atm mesurée à 25°C.

2. Procédé selon la revendication 1, **caractérisé en ce que** l'atmosphère modifiée comprend de 15 à 20 % en volume d'O₂ et de 1 à 5 % en volume de CO₂.

3. Procédé selon la revendication 1, **caractérisé en ce que** les moisissures sont choisies parmi *Penicillium* et *Cylindrocarpon.*

4. Procédé selon la revendication 2, **caractérisé en ce que** les moisissures sont choisis parmi les espèces *Pénicillium camemberti* et *Cylindrocarpon heteronema.*

5. Procédé selon l'une des revendications 1 à 3, **caractérisé en ce que** la levure est du genre *Geotrichum,* notamment *Geotrichum candidum.*

6. Système (1;10) de conditionnement de fromages ou de spécialités fromagères à croûte naturelle fleurie, **caractérisé en ce qu'**il comprend une enceinte hermétiquement close comprenant sur tout ou partie de sa surface un film (8;14) formé d'un matériau à perméabilité sélective assurant un flux gazeux avec l'atmosphère extérieure de manière à constituer et maintenir autour du fromage ou de la spécialité fromagère une atmosphère modifiée comprenant de 14 à 20 % en volume d'O₂ et de 1 à 6 % en volume de CO₂ pendant toute la durée de conservation du fromage ou de la spécialité fromagère, ledit matériau à perméabilité sélective ayant une perméabilité à l'oxygène et à l'anhydride carbonique inférieure à 2 000 000 cm²/m²/24h/atm et supérieure à 5 000 cm²/m²/24h/atm mesurée à 25°C.

7. Système de conditionnement selon la revendication 6, **caractérisé en ce que** l'enceinte est constituée en totalité d'un matériau à perméabilité sélective et consiste avantageusement en un sachet scellé par thermoscellage après introduction du fromage.

8. Système de conditionnement selon la revendication 6, **caractérisé en ce que** l'enceinte comprend pour partie un matériau à perméabilité sélective, et pour partie un matériau imperméable aux gaz.

9. Système de conditionnement selon la revendication 8, **caractérisé en ce que** l'enceinte comporte une cloche (12) en un matériau imperméable aux gaz, laquelle cloche est obturée à l'écart de son extrémité ouverte par le film (14) formé d'un matériau à perméabilité sélective, des lumières (24) de passage des gaz étant ménagées dans la cloche (12) entre son extrémité ouverte et le film (14).

10. Système de conditionnement selon la revendication 8, **caractérisé en ce que** l'enceinte comprend une partie formant barquette constituée par un matériau thermoplastique imperméable aux gaz et une partie formant couvercle, notamment un opercule en un matériau thermoplastique à perméabilité sélective.

11. Système de conditionnement selon la revendication 6, **caractérisé en ce que** le matériau à perméabilité sélective a une perméabilité à l'oxygène et à l'anhydride carbonique comprise entre 150000 et 360 000 cm³/m²/24 heures/atm, mesurée à 25°C.

12. Système de conditionnement selon la revendication 6, **caractérisé en ce que** le matériau à perméabilité sélective a une perméabilité à la vapeur d'eau inférieure à 800 g/m²/24 heures/atm et supérieure à 1 g/m²/24 heures/atm.

## Patentansprüche

1. Verfahren zum Verpacken von Käse oder Käsespezialitäten mit Schimmelrinde, **dadurch gekennzeichnet, dass** man den Käse oder die Käsespezialität in einen hermetisch geschlossenen Behälter setzt, welcher über die gesamte oder einen Teil seiner Oberfläche ein Material mit selektiver Permeabilität aufweist, welche mit der äußeren Atmosphäre einen gasförmigen Strom in einer Art und Weise sicherstellt, um um den Käse oder die Käsespezialität herum eine Atmosphäre zu bilden und aufrecht zu halten, welche 14 bis 20 Vol.-% O₂ und 1 bis 6 Vol.-% CO₂ über die gesamte Aufbewahrungszeit des Käses oder der Käsespezialität enthält, wobei das Material mit selektiver Permeabilität eine Permeabilität für Sauerstoff und für Kohlendioxid von weniger als 2 000 000 cm³/m²/24h/atm und größer als 5 000 cm³/m²/24h/atm, gemessen bei 25° C, aufweist.

2. Verfahren gemäß Anspruch 1, **dadurch gekennzeichnet, dass** die modifizierte Atmosphäre 15 bis 20 Vol.-% O₂ und 1 bis 5 Vol.-% CO₂ aufweist.

3. Verfahren gemäß Anspruch 1, **dadurch gekennzeichnet, dass** die Schimmelpilze ausgewählt werden aus *Penizillin* und *Cylindrokarpon.*

4. Verfahren gemäß Anspruch 2, **dadurch gekennzeichnet, dass** die Schimmelpilze ausgewählt werden aus den Gattungen *Penizillin camemberti* und *Cylindrokarpon heteronema.*

5. Verfahren gemäß einem der Ansprüche 1 bis 3, **dadurch gekennzeichnet, dass** das Treibmittel von der Sorte *Geotrichum,* insbesondere *Geotrichum candidum* ist.

6. System (1, 10) einer Verpackung von Käse oder Käsespezialitäten mit Schimmelrinde, **dadurch gekennzeichnet, dass** es einen hermetisch geschlossenen Behälter aufweist, der über den gesamten oder einen Teil seiner Oberfläche eine Folie (8, 14) aufweist, welche aus einem Material mit selektiver Permeabilität gebildet ist, welche einen gasförmigen Strom mit der äußeren Atmosphäre in einer Art und Weise sicherstellt, um um den Käse oder die Käsespezialität herum eine modifizierte Atmosphäre zu bilden und aufrecht zu erhalten, welche 14 bis 20 Vol.-% O₂ und 1 bis 6 Vol.-% CO₂ aufweist, über die gesamte Aufbewahrungsdauer des Käses oder der Käsespezialität, wobei das Material mit selektiver Permeabilität eine Permeabilität für Sauerstoff und für Kohlendioxid von weniger als 2 000 000 cm³/m²/24h/atm und mehr als 5 000 cm³/m²/24h/atm, gemessen bei 25° C, aufweist.

7. Verpackungssystem gemäß Anspruch 6, **dadurch gekennzeichnet, dass** der Behälter vollständig aus einem Material mit selektiver Permeabilität gebildet ist und vorteilhafterweise aus einem Beutel besteht, welcher nach Einführen des Käses durch Thermoversiegelung versiegelt ist.

8. Verpackungssystem gemäß Anspruch 6, **dadurch gekennzeichnet, dass** der Behälter teilweise ein Material mit selektiver Permeabilität und teilweise ein Material, welches für Gas nicht durchlässig ist, aufweist.

9. Verpackungssystem gemäß Anspruch 8, **dadurch gekennzeichnet, dass** der Behälter eine Glocke (12) aus einem für Gas undurchlässigem Material aufweist, welche Glocke abseits von ihrem offenen Ende durch die Folie (14) abgedichtet ist, welche aus einem Material mit selektiver Permeabilität gebildet ist, wobei Langlöcher 24 eines Gasdurchgangs in der Glocke (12) zwischen ihrem offenen Ende und der Folie (14) vorgesehen sind.

10. Verpackungssystem gemäß Anspruch 8, **dadurch gekennzeichnet, dass** der Behälter einen Teil aufweist, welcher eine Schale bildet, der aus einem thermoplastischen, gegen Gas undurchlässigem Material gebildet ist, und einem Teil, welcher einen Deckel bildet, insbesondere einen Schutzdeckel, aus einem thermoplastischen Material mit selektiver Permeabilität.

11. Verpackungssystem gemäß Anspruch 6, **dadurch gekennzeichnet, dass** das Material mit selektiver Permeabilität eine Permeabilität gegenüber Sauerstoff und Kohlendioxid aufweist, zwischen 150 000 und 360 000 cm³/m²/24h/atm, gemessen bei 25° C, aufweist.

12. Verpackungssystem gemäß Anspruch 6, **dadurch gekennzeichnet, dass** das Material mit selektiver Permeabilität eine Permeabilität gegenüber Wasserdampf von weniger als 800 g/m²/24h/atm und größer als 1 g/m²/24h/atm aufweist.

## Claims

1. A method of packaging cheeses or cheese specialities having a naturally bloomy rind, the method being **characterized in that** the cheese or cheese speciality is placed in a hermetically closed enclosure including over all or part of its surface a material of selective permeability enabling gas to be exchanged with the outside atmosphere so as to constitute and maintain around the cheese or the cheese speciality an atmosphere comprising 14% to 20% by volume of O₂ and 1% to 6% by volume of CO₂ throughout the time the cheese or cheese speciality is conserved, said selective permeability material having permeability to oxygen and carbon dioxide of less than 2,000,000 cm³/m²/24 h/atm and greater than 5000 cm³/m²/24 h/atm when measured at 25°C.

2. A method according to claim 1, **characterized in that** the modified atmosphere comprises 15% to 20% by volume of O₂ and 1% to 5% by volume of CO₂.

3. A method according to claim 1, **characterized in that** the molds are selected from *Penicillium* and *Cylindrocarpon.*

4. A method according to claim 2, **characterized in that** the molds are selected from the species *Penicillium camemberti* and *Cylindrocarpon heteronema.*

5. A method according to any one of claims 1 to 3, **characterized in that** the yeast is of the genus *Geotrichum,* in particular *Geotrichum candidum.*

6. A system (1: 10) for packaging cheese or cheese specialities having a naturally bloomy rind, the system being **characterized in that** it comprises a hermetically closed enclosure including over all or part of its surface a film (8; 14) formed of a material of selective permeability providing gas exchange with the outside atmosphere in such a manner as to constitute and maintain around the cheese or the cheese speciality a modified atmosphere comprising 14% to 20% by volume of O₂ and 1% to 6% by volume of CO₂ throughout the duration of conservation of the cheese or the cheese speciality, said material of selective permeability material having permeability to oxygen and carbon dioxide of less than 2,000,000 cm³/m²/24 h/atm and greater than 5000 cm³/m²/24 h/atm when measured at 25°C.

7. A packaging system according to claim 6, **characterized in that** the enclosure is made completely out of a material of selective permeability and advantageously consists in a bag sealed by heat sealing after the cheese has been inserted therein.

8. A packaging system according to claim 6, **characterized in that** the enclosure comprises a portion made of a material of selective permeability, and a portion made of a material that is impermeable to gas.

9. A packaging system according to claim 8, **characterized in that** the enclosure comprises a bell (12) of material that is impermeable to gas, which bell is closed away from its open end by a film (14) made of a material of selective permeability, gas-passing slots (24) being formed in the bell (12) between its open end and the film (14).

10. A packaging system according to claim 8, **characterized in that** the enclosure comprises a tray-forming portion made of a material that is impermeable to gas and a lid-forming portion, in particular a capsule made of a thermoplastic material having selective permeability.

11. A packaging system according to claim 6, **characterized in that** the material having selective permeability has permeability to oxygen and to carbon dioxide lying in the range 150,000 to 360,000 cm³/m²/24 hours/atm, measured at 25°C.

12. A packaging system according to claim 6, **characterized in that** the material having selective permeability has permeability to water vapor of less than 80 g/m²/24 hours/atm and greater than 1 g/m²/24 hours/atm.
